# EUROPÄISCHE PATENTANMELDUNG

(11) **EP 3 522 336 A1**
(43) Veröffentlichungstag der Anmeldung: **07.08.2019**
(21) Anmeldenummer: 19152936.1
(22) Anmeldetag: 22.01.2019
(51) Int. Cl.: H02K 1/27

(54) **ROTOR**

(30) Priorität: 01.02.2018 DE 102018201591
(71) Anmelder: Baumüller Nürnberg GmbH, 90482 Nürnberg (DE)
(72) Erfinder: TAFELMAYER, Florian, 90482 Nürnberg (DE); DEÁK, Csaba Zsolt, 90482 Nürnberg (DE)
(74) Vertreter: FDST Patentanwälte

(57) **Zusammenfassung**

Die Erfindung betrifft einen Rotor (26) einer elektrischen Maschine (6), insbesondere Elektromotor, mit einem eine Welle (28) umgebenden Blechpaket (30), das einen sich in einer axialen Richtung (40) erstreckenden ersten Blechpaketabschnitt (44) und einen sich in der axialen Richtung (40) erstreckenden zweiten Blechpaketabschnitt (42) aufweist. Die Blechpaketabschnitte (42, 44) sind aneinander mittels eines Befestigungselements (52) angebunden, das aus einem dia- oder paramagnetischen Material erstellt ist. Die Erfindung betrifft ferner eine elektrische Maschine (6).

## Beschreibung

Die Erfindung betrifft einen Rotor einer elektrischen Maschine, mit einem eine Welle umgebenden Blechpaket. Unter elektrischer Maschine wird hierbei insbesondere ein bürstenloser Elektromotor (Gleichstrommotor) oder eine Synchronmaschine, jedoch auch ein Generator verstanden. Die Erfindung betrifft ferner einen Elektromotor, der insbesondere ein Hauptantrieb eines Kraftfahrzeugs ist.

Bürstenlose Elektromotoren weisen üblicherweise einen Rotor auf, der mittels eines Stators in eine Rotationsbewegung versetzt wird. Hierfür umfasst der Stator eine Anzahl von Spulen die ein mehrphasiges Wicklungssystem bilden, üblicherweise dreiphasig, die mittels einer Elektronik bestromt werden. Dabei sind die einzelnen Spulen entweder in einer sogenannten Dreiecksschaltung oder aber einer Sternschaltung miteinander verbunden. Mittels der Spulen wird im Betrieb ein rotierendes Magnetfeld erzeugt, das den Rotor antreibt.

Der Rotor selbst ist permanenterregt. Mit anderen Worten sind an dem Rotor Permanentmagnete angebracht, die mit dem von dem Stator erzeugten Magnetfeld wechselwirken. Hierbei liegen die Permanentmagneten in Taschen eines Blechpakets ein, dessen einzelne Bleche senkrecht zur Rotorachse angeordnet sind. Die Bleche liegen über eine elektrisch isolierende Lackschicht aneinander an, um ein Ausbreiten von parasitären Wirbelströmen in dem Blechpaket zu verhindern, die sonst den Wirkungsgrad des Elektromotors schmälern würden.

Das Blechpaket leitet die Krafteinwirkung auf die Permanentmagnete aufgrund des rotierenden Magnetfelds auf eine Welle, was zu einer Drehbewegung des Rotors bezüglich des Stators führt. Hierfür muss das Blechpaket vergleichsweise robust ausgeführt werden, um einerseits eine Ablösung der Permanentmagneten zu verhindern und andererseits die Geometrie des Rotors zu bewahren. In dem Blechpaket können sich jedoch zwischen den einzelnen Permanentmagneten ungewollte magnetische Kurzschlüsse ausbilden, was den Wirkungsgrad reduziert.

Der Erfindung liegt die Aufgabe zugrunde, einen besonders geeigneten Rotor einer elektrischen Maschine sowie eine besonders geeignete elektrische Maschine anzugeben, wobei vorteilhafterweise eine Robustheit und/oder ein Wirkungsgrad erhöht ist.

Hinsichtlich des Rotors wird diese Aufgabe durch die Merkmale des Anspruchs 1 und hinsichtlich der elektrischen Maschine durch die Merkmale des Anspruchs 12 erfindungsgemäß gelöst. Vorteilhafte Weiterbildungen und Ausgestaltungen sind Gegenstand der jeweiligen Unteransprüche.

Der Rotor ist ein Bestandteil einer elektrischen Maschine. Die elektrische Maschine ist beispielsweise bürstenbehaftet. Besonders bevorzugt jedoch ist die elektrische Maschine bürstenlos ausgestaltet. Beispielsweise ist die elektrische Maschine ein Generator. Besonders bevorzugt jedoch ist die elektrische Maschine ein Elektromotor, insbesondere ein bürstenloser Elektromotor. Die elektrische Maschine ist insbesondere eine Synchronmaschine, wie ein Synchronmotor. Vorzugsweise ist bei Betrieb die elektrische Maschine mit einem Umrichter elektrisch verbunden und wird mittels dessen betrieben oder umfasst den Umrichter. Die elektrische Maschine weist beispielsweise eine Leistung zwischen 30 kW und 150 kW, zwischen 40 kW und 140 kW oder zwischen 60 kW und 100 kW und insbesondere gleich 80 kW auf, wobei jeweils zum Beispiel eine Abweichung von 10 kW, 5 kW, 2 kW oder 0 kW vorhanden ist.

Geeigneterweise weist die elektrische Maschine eine Drehzahl, beispielsweise eine Nenndrehzahl oder maximale Drehzahl, zwischen 200 U/min. und 8.000 U/min., zwischen 300 U/min. und 6.000 U/min., zwischen 500 U/min. und 5.000 U/min. oder zwischen 1.000 U/min. und 4.000 U/min. auf, wobei insbesondere eine Abweichung von 100 U/min., 50 U/min., 20 U/min. oder 0 U/min. vorhanden ist. Besonders bevorzugt weist die elektrische Maschine ein Drehmoment, beispielsweise ein Maximal- und/oder Nenndrehmoment zwischen 100 Nm und 20.000 Nm, zwischen 165 Nm und 17.500 Nm, zwischen 200 Nm und 15.000 Nm, zwischen 500 Nm und 10.000 Nm oder zwischen 5.000 Nm und 8.000 Nm auf, wobei insbesondere jeweils eine Abweichung von 50 Nm, 20 Nm, 10 Nm oder 0 Nm vorhanden ist.

Die elektrische Maschine ist beispielsweise ein Bestandteil einer Industrieanlage, wie einer Servopresse. Mit anderen Worten wird mittels der elektrischen Maschine insbesondere eine Presse angetrieben. Alternativ hierzu wird die elektrische Maschine bevorzugt bei der Kunststoffverarbeitung und/oder der Kunststoffherstellung verwendet. Beispielsweise wird ein Extruder oder ein sonstiger Bestandteil einer Kunststoffspritzgussmaschine, wie ein Stempel mittels der elektrischen Maschine angetrieben. Alternativ hierzu ist die elektrische Maschine ein Bestandteil eines Schiffsantriebs, welcher insbesondere vorgesehen und eingerichtet ist, innerhalb einer Gondel an einem Rumpf eines Schiffs montiert zu werden. In einer weiteren Alternative ist die elektrische Maschine ein Bestandteil eines Fahrrads, wie eines Pedelecs, und dient dem Vortrieb des Fahrrads.

Besonders bevorzugt ist der Elektromotor ein Bestandteil eines Kraftfahrzeugs, wie eines Nutzfahrzeugs. Das Nutzfahrzeug ist beispielsweise ein Bus oder ein sonstiges Kraftfahrzeug, wie eine Pistenraupe oder ein Flurförderfahrzeug. In einer weiteren Alternative ist der Elektromotor ein Bestandteil eines Personenkraftwagens. Der Elektromotor dient beispielsweise dem Betrieb eines Aggregats des Kraftfahrzeugs, wie einer Pumpe, beispielsweise einer Hydraulikpumpe. Besonders bevorzugt jedoch dient der Elektromotor dem Vortrieb des Kraftfahrzeugs. Mit anderen Worten ist der Elektromotor ein Bestandteil eines Hauptantriebs des Kraftfahrzeugs. Hierbei werden beispielsweise Antriebsräder des Kraftfahrzeugs mittels des Elektromotors angetrieben, zweckmäßigerweise direkt oder indirekt über ein Getriebe. Das Kraftfahrzeug weist beispielsweise zusätzlich einen Verbrennungsmotor auf, sodass das Kraftfahrzeug ein sogenanntes Hybrid-Kraftfahrzeug ist. Alternativ hierzu weist das Kraftfahrzeug lediglich den Elektromotor als Hauptantrieb auf. Beispielsweise ist jedem der Räder des Kraftfahrzeugs jeweils ein derartiger Elektromotor zugeordnet.

Der Rotor weist eine Welle auf, die beispielsweise aus einem Stahl, insbesondere aus einem Edelstahl erstellt ist. Geeigneterweise erstreckt sich die Welle in einer axialen Richtung (Axialrichtung). Die Welle ist insbesondere vorgesehen und eingerichtet, drehbar bezüglich einer Rotationsachse gelagert zu werden, die vorzugsweise parallel zur axialen Richtung verläuft. Die Welle ist beispielsweise im Wesentlichen zylinderförmig oder hohlzylinderförmig ausgestaltet, wobei die Zylinderachse geeigneterweise gleich der Rotationsachse ist.

Ferner weist der Rotor ein Blechpaket auf, der die Welle umfangsseitig umgibt. Das Blechpaket ist vorzugsweise im Wesentlichen hohlzylindrisch ausgestaltet. Das Blechpaket weist eine Anzahl an Blechlagen auf, die in der axialen Richtung übereinander gestapelt sind. Hierbei wird jede Blechlage beispielsweise lediglich mittels eines einzigen Blechs gebildet oder weist eine Anzahl unterschiedlicher Bleche auf, die in einer Ebene angeordnet sind. Die Blechlagen sind zweckmäßigerweise in der axialen Richtung derart übereinander gestapelt, dass diese miteinander fluchten, also kein Versatz zwischen den einzelnen Blechlagen vorliegt. Die einzelnen Blechlagen sind elektrisch gegeneinander isoliert und weisen beispielsweise hierfür eine Lackschicht auf. Insbesondere weist jede der Blechlagen ein aus einem Weicheisen oder Trafoeisen erstelltes Blech auf, welches zumindest in der Axialrichtung mit der Lackschicht versehen ist. Die Blechlagen sind beispielsweise in der Axialrichtung aneinandergeklebt (z.B. durch Punktklebung oder Backlackpaketierung) oder stanzpaketiert.

Das Blechpaket weist einen sich in der axialen Richtung erstreckenden ersten Blechpaketabschnitt und einen sich in der axialen Richtung erstreckenden zweiten Blechpaketabschnitt auf. Insbesondere weisen die beiden Blechpaketabschnitte in der axialen Richtung die gleiche Ausdehnung auf und sind zweckmäßigerweise deckungsgleich angeordnet. Hierbei sind die beiden Blechpaketabschnitte beispielsweise in einer tangentialen Richtung und oder einer radialen Richtung zueinander versetzt, die insbesondere bezüglich der Rotationsachse des Rotors definiert sind. In der Axialrichtung sind jedoch die beiden Blechpaketabschnitt zweckmäßigerweise deckungsgleich und weisen somit in der Axialrichtung den gleichen Anfangs- und/oder Endpunkt auf. Mit anderen Worten weist jede der Blechlagen des Blechpakets zumindest einen Teil des ersten als auch des zweiten Blechpaketabschnitts auf. Die beiden Blechpaketabschnitte sind aneinander mittels eines Befestigungselements angebunden und werden somit zumindest teilweise mittels des Befestigungselements stabilisiert. Hierbei ist das Befestigungselement beispielsweise in direktem mechanischem Kontakt mit dem ersten und/oder zweiten Blechpaketabschnitt. In einer weiteren Alternative ist das Befestigungselementen an einem weiteren Bauteil des Rotors angebunden, und die beiden Blechpaketabschnitte sind zumindest über das weitere Bauteil und das Befestigungselement in mechanischem Kontakt miteinander.

Das Befestigungselement ist aus einem dia- oder paramagnetischen Material erstellt. Mit anderen Worten ist die magnetische Permeabilität des Materials (µᵣ) kleiner als 1 oder beispielsweise zwischen 1 und 10, zwischen 1 und 5 oder zwischen 1 und 2. Insbesondere ist das Befestigungselement aus einem Aluminium, also reinem Aluminium oder einer Aluminiumlegierung, einem Edelstahl oder einem Kunststoff erstellt. Beispielsweise ist das Befestigungselement einstückig oder aus mehreren Teilen zusammengesetzt, die beispielsweise aus unterschiedlichen Materialien oder besonders bevorzugt aus einem Material erstellt sind. Das Befestigungselement ist insbesondere ein Festkörper und geeigneterweise starr. Somit ist das Befestigungselement bei Betrieb nicht oder lediglich in einem vergleichsweise geringen Umfang verformbar, vorzugsweise hierbei elastisch.

Aufgrund des Befestigungselements sind die beiden Blechpaketabschnitte zueinander stabilisiert. Somit ist es ermöglicht, den Rotor mit einer vergleichsweise hohen Drehgeschwindigkeit zu betreiben, wobei eine Beschädigung oder Ablösen der beiden Blechpaketabschnitte voneinander unterbunden ist. So ist es insbesondere möglich, ein vergleichsweise stabiles Befestigungselement heranzuziehen. Daher ist auch ein Aufbringen eines vergleichsweise hohen Drehmoments und/oder ein Betrieb des Rotors mit einer vergleichsweise hohen Drehzahl sicher möglich. Aufgrund der Materialwahl ist hierbei ein Ausbreiten von Magnetfeldern zwischen den beiden Blechpaketabschnitten über das Befestigungselement unterbunden oder zumindest verringert, sodass vorhandene Magnetfelder geeignet geformt werden können. So ist insbesondere ein Ausbreiten von Streufeldern über das Befestigungselement unterbunden, weswegen ein Wirkungsgrad der elektrischen Maschine erhöht ist.

Beispielsweise ist das Blechpaket mit einem Verguss versehen, also insbesondere vergossen. Der Verguss ist insbesondere aus einem Kunststoff erstellt, zum Beispiel aus einem Thermoplast. Vorzugsweise wird das Blechpaket mit dem Verguss umspritzt. Nach Fertigung befindet sich der Verguss in etwaigen Ausnahmen des Blechpakets, sodass diese mit dem Verguss befüllt sind. Somit wird eine Stabilität des Blechpakets weiter erhöht. Vorzugsweise ist hierbei das Material des Vergusses ebenfalls para-oder diamagnetisch.

Beispielsweise ist der erste Blechpaketabschnitt mittels eines weiteren Bauteils an dem zweiten Blechpaketabschnitt angebunden. Beispielsweise sind die beiden Blechpaketabschnitte mechanisch direkt aneinander angebunden, und beispielsweise aneinander angeformt. Mit anderen Worten sind der erste Blechpaketabschnitt und der zweite Blechpaketabschnitt miteinander einstückig, zumindest die jeweiligen Bleche der Blechpaketabschnitte. Aufgrund der Einstückigkeit der beiden Blechpaketabschnitte ist hierbei eine Brücke zwischen den beiden Blechpaketabschnitten gebildet, über die ein Ausbreiten von Magnetfeldlinien ermöglicht ist. Insbesondere ist hierbei die Verbindung wieder vergleichsweise klein. Aufgrund der Verbindung ist jedoch eine Fertigung des Blechpakets erleichtert. So ist insbesondere jede Blechlage einstückig, sodass ein Stapeln der einzelnen Bleche erleichtert ist. Dabei ist die Verbindung zwischen den einzelnen Blechpaketabschnitten vergleichsweise filigran ausführbar, und eine mechanische Stabilität zwischen beiden Blechpaketabschnitten wird mittels des Befestigungselements realisiert.

Besonders bevorzugt sind die beiden Blechpaketabschnitt mechanisch voneinander getrennt und sind somit nicht in direktem mechanischem Kontakt miteinander. Mit anderen Worten liegen die beiden Blechpaketabschnitte mechanisch nicht aneinander an. So ist vorzugsweise der erste Blechpaketabschnitt unter Ausbildung eines Spalts vollständig von dem zweiten Blechpaketabschnitt beabstandet. Der Spalt ragt insbesondere in der axialen Richtung durch das vollständige Blechpaket hindurch. Hierbei ist der erste Blechpaketabschnitt lediglich mittels des Befestigungselements in mechanischem Kontakt mit dem zweiten Blechpaketabschnitt. In einer Alternative hierzu sind die beiden Blechpaketabschnitte mit einer Anzahl derartiger Befestigungselemente, die insbesondere zueinander baugleich sind, in mechanischem Kontakt miteinander, was eine Stabilität erhöht. Aufgrund des Spalts ist ein Ausbreiten von Magnetfeldlinien zwischen den beiden Blechpaketabschnitten im Wesentlichen stark reduziert. Beispielsweise ist der Spalt mit dem Vergusses befüllt. Zumindest jedoch sind die beiden Blechpaketabschnitte lediglich mittels des para-oder diamagnetischen Materials in mechanischem Kontakt miteinander. Somit ist ein Ausbreiten von Magnetfeldlinien zwischen den beiden Blechpaketabschnitten im Wesentlichen unterbunden. Insbesondere weist der Rotor keinen Magneten auf, also insbesondere weder einen Permanentmagneten noch einen Elektromagneten. Die elektrische Maschine ist somit zweckmäßigerweise als Reluktanzmotor, vorzugsweise als Synchron-Reluktanzmotor, ausgebildet. Mit anderen Worten ist der Rotor magnetlos ausgestaltet. Somit bilden sich bei Betrieb in den beiden Blechpaketabschnitten aufgrund von Induktion Magnetfelder aus, wobei aufgrund des Spalts die Formung der Magnetfelder vereinfacht ist.

Beispielsweise weist der Spalt senkrecht zur axialen Richtung über die vollständige Länge des Blechpakets in der axialen Richtung einen konstanten Querschnitt auf. Der Querschnitt ist beispielsweise U- oder V-förmig, wobei die Freienden der jeweiligen Form zweckmäßigerweise an einer Umfangsseite des im Wesentlichen zylindrisch ausgestalteten Rotors enden. Mit anderen Worten ist der Spalt umfangsseitig geöffnet. Auf diese Weise ist eine vergleichsweise effiziente Ausbildung von Magnetfeldlinien in dem Blechpaket ermöglicht. Beispielsweise weist das Blechpaket einen dritten Blechpaketabschnitt auf, der unter Ausbildung eines zweiten Spalts von dem ersten Blechpaketabschnitt beabstandet ist, wobei der erste Blechpaketabschnitt mittels eines zweiten Befestigungselements in mechanischem Kontakt mit dem dritten Blechpaketabschnitt ist, und wobei der erste Blechpaketabschnitt zwischen dem dritten Blechpaketabschnitt und dem zweiten Blechpaketabschnitt angeordnet ist, insbesondere in einer tangentialen und/oder radialen Richtung. Der dritte Blechpaketabschnitt ist hierbei ebenfalls mittels einzelner Bleche gebildet und bildet beispielsweise zumindest teilweise einen Umfang des Rotors. Der Querschnitt des zweiten Spalts weist vorzugsweise im Wesentlichen die gleiche Form, jedoch beispielsweise verkleinert, wie der Querschnitt des Spalts auf. Das zweite Befestigungselement ist ebenfalls vorzugsweise aus einem para- oder diamagnetischen Material erstellt, insbesondere aus dem gleichen Material wie das Befestigungselement. Aufgrund des zusätzlichen zweiten Spalts ist somit eine Formung der Magnetfelder verbessert. Beispielsweise weist das Blechpaket einen oder mehrere weitere Blechpaketabschnitt auf, die unter Ausbildung eines jeweiligen Spalts von dem ersten und den übrigen Blechpaketabschnitten beabstandet ist, wobei der erste Blechpaketabschnitt zumindest mittelbar mittels eines jeweiligen Befestigungselements in mechanischem Kontakt mit dem dritten Blechpaketabschnitt ist, und wobei der erste Blechpaketabschnitt zwischen dem weiteren Blechpaketabschnitt und dem zweiten Blechpaketabschnitt angeordnet ist, insbesondere in einer tangentialen und/oder radialen Richtung.

In einer alternativen Ausführungsform der Erfindung ist innerhalb des Spalts ein Permanentmagnet angeordnet. Mit anderen Worten ist der erste Blechpaketabschnitt unter Ausbildung des Spaltes von dem zweiten Blechpaketabschnitt beabstandet, und der Permanentmagnet ist in dem Spalt angeordnet. Der Spalt bildet somit eine Tasche. Zweckmäßigerweise liegt der Permanentmagnet an der Begrenzung der Tasche und somit insbesondere an dem ersten Blechpaketabschnitt und dem zweiten Blechpaketabschnitt an. Mit anderen Worten ist der erste Blechpaketabschnitt mittels des Befestigungselements und mittels des Permanentmagneten in mechanischem Kontakt mit dem zweiten Blechpaketabschnitt. Geeigneterweise ist der erste Blechpaketabschnitt lediglich mittels des Befestigungselements und mittels des Permanentmagneten sowie gegebenenfalls einem weiteren Befestigungselement und/oder dem Vergusses in mechanischem Kontakt mit dem zweiten Blechpaketabschnitt. Zweckmäßigerweise ist hierbei jedem der beiden Blechpaketabschnitte einer der Magnetpole des Permanentmagneten zugeordnet. Beispielsweise liegt der Permanentmagnet an dem ersten und/oder zweiten Blechpaketabschnitt mechanisch direkt oder indirekt, beispielsweise über eine Isolierung, an. Zusammenfassend liegt der Permanentmagnet an dem ersten und/oder zweiten Blechpaketabschnitt an, und die beiden Blechpaketabschnitte sind aneinander mittels des Befestigungselements befestigt. Folglich ist aufgrund des Spalts ein magnetischer Kurzschluss im Wesentlichen unterbunden, was den Wirkungsgrad der elektrischen Maschine erhöht. Der Permanentmagnet ist beispielsweise aus einem Ferrit oder NdFeB erstellt, beispielsweise mittels Sintern.

Insbesondere reicht der Spalt in der axialen Richtung vollständig durch das Blechpaket hindurch. Geeigneterweise weist der Spalt hierbei senkrecht zu der axialen Richtung stets den gleichen Querschnitt auf. Beispielsweise ist der Querschnitt im Wesentlichen V-förmig. Hierbei weist die Spitze der V-Form zweckmäßigerweise zur Rotationsachse und ist von dieser beabstandet. Insbesondere ist die V-Form achsensymmetrisch bezüglich einer radialen Geraden. Geeigneterweise liegt in dem Spalt ein zweiter Permanentmagnet ein. Insbesondere ist jedem der Schenkel der V-Form einer der Permanentmagneten zugeordnet. Beispielsweise sind die beiden Permanentmagnete baugleich zueinander. Vorzugsweise weisen die gleichen magnetischen Pole des Permanentmagneten und des zweiten Permanentmagneten zu dem ersten Blechpaketabschnitt. Mit anderen Worten liegt entweder der Nord- oder Südpol des Permanentmagneten und des zweiten Permanentmagneten an dem ersten Blechpaketabschnitt an. Auf diese Weise sind ein Wirkungsgrad der elektrischen Maschine und ein Formen der Magnetfeldlinien durch Flusskonzentration verbessert.

In einer weiteren Alternative ist der Querschnitt des Spalts U-förmig. Hierbei weisen somit zwei der Schenkel des Querschnitts ein Freiende auf, welches insbesondere an einer umfangsseitigen Oberfläche des Blechpakets mündet. Diese beiden Schenkel sind beispielsweise zueinander parallel oder schließen einen abweichenden Winkel zueinander ein. Geeigneterweise ist der Querschnitt symmetrisch bezüglich einer radialen Geraden und vorzugsweise von der Rotationsachse beabstandet. In dem Spalt liegen hierbei zweckmäßigerweise der Permanentmagnet, der zweite Permanentmagnet und ein dritter Permanentmagnet ein, wobei jedem der Schenkel des Querschnitts einer der insgesamt drei Permanentmagneten zugeordnet ist. Vorzugsweise sind hierbei zumindest zwei der Permanentmagnete zueinander baugleich, was Herstellungskosten reduziert. Dem ersten Blechpaketabschnitt sind hierbei vorzugsweise die gleichen magnetischen Pole sämtlicher Permanentmagnete zugewiesen. Mit anderen Worten liegen somit entweder lediglich Nord- oder Südpole an dem ersten Blechpaketabschnitt an. Infolgedessen werden die Magnetfeldlinien im Wesentlichen aus dem ersten Blechpaketabschnitt herausgedrängt, und ein magnetischer Kurzschluss innerhalb des ersten Blechpaketabschnitts ist verhindert, der anderweitig zu einer Reduzierung des Wirkungsgrads führen könnte.

Beispielsweise weist das Blechpaket den dritten Blechpaketabschnitt auf, der unter Ausbildung des zweiten Spalts von dem ersten Blechpaket beabstandet ist. Der dritte Blechpaketabschnitt ist hierbei vollständig von sowohl dem ersten als auch dem zweiten Blechpaketabschnitt beabstandet und mechanisch in keinem Kontakt mit diesen. Der erste Blechpaketabschnitt ist mittels des zweiten Befestigungselements, insbesondere mit einer Anzahl derartiger zweiter Befestigungselemente, und mittels eines vierten Permanentmagneten in mechanischem Kontakt mit dem dritten Blechpaketabschnitt. Hierbei liegt der vierte Permanentmagnet zweckmäßigerweise sowohl an dem dritten Blechpaketabschnitt als auch an dem ersten Blechpaketabschnitt mechanisch direkt an. Beispielsweise ist der vierte Permanentmagnet baugleich zu zumindest einem der weiteren Permanentmagnete des Rotors, was Herstellungskosten reduziert. Das zweite Befestigungselement ist aus einem para- oder diamagnetischen Material erstellt und vorzugsweise baugleich zu dem Befestigungselement.

Der erste Blechpaketabschnitt ist zwischen dem dritten Blechpaketabschnitt und dem zweiten Blechpaketabschnitt angeordnet, insbesondere in tangentialer und/oder radialer Richtung. Hierbei ist der dritte Blechpaketabschnitt zweckmäßigerweise weiter von der Rotationsachse entfernt als der erste Blechpaketabschnitt. Beispielsweise ist der zweite Spalt ebenfalls mit dem Verguss befüllt. Aufgrund des zweiten Spalts ist eine Formung der Magnetfeldlinien vereinfacht. Geeigneterweise ist hierbei ein zu dem Permanentmagnet entgegengesetzter Magnetpol des zweiten Permanentmagneten dem erster Blechpaketabschnitt zugeordnet, sodass die Magnetfeldlinien von dem Permanentmagneten durch den ersten Blechpaketabschnitt zu dem vierten Permanentmagneten reichen. Somit ist eine Magnetfeldstärke erhöht. Insbesondere weist der zweite Spalt einen U- oder V-förmigen Querschnitt auf, und die Form des Querschnitts des zweiten Spalts senkrecht zur Rotationsachse korrespondiert insbesondere zur Form des Querschnitts des Spalts. Aufgrund des vierten Permanentmagneten ist die Menge an magnetischem Material erhöht, was ein Drehmoment des Rotors erhöht.

Beispielsweise weist das Blechpaket einen oder mehrere weitere Blechpaketabschnitt auf, die unter Ausbildung eines jeweiligen Spalts von dem ersten und den übrigen Blechpaketabschnitten beabstandet ist, wobei der erste Blechpaketabschnitt zumindest mittelbar mittels eines jeweiligen Befestigungselements in mechanischem Kontakt mit dem dritten Blechpaketabschnitt ist, und wobei der erste Blechpaketabschnitt zwischen dem weiteren Blechpaketabschnitt und dem zweiten Blechpaketabschnitt angeordnet ist, insbesondere in einer tangentialen und/oder radialen Richtung. In dem jeweiligen Spalt ist zweckmäßigerweise jeweils ein zugeordneter Permanentmagnet angeordnet.

In einer weiteren Alternative der Erfindung weist der Spalt und der erste sowie der zweite Blechpaketabschnitt einen trapezförmigen Querschnitt auf. Hierbei ist der Querschnitt sowohl des Spalts als auch der Blechpaketabschnitts symmetrisch zu jeweils einer zugeordneten radialen Geraden, und der Permanentmagnet ist insbesondere zumindest abschnittsweise formschlüssigen zwischen den beiden Blechpaketabschnitten angeordnet. Mit anderen Worten weist der Permanentmagnet ebenfalls senkrecht zur axialen Richtung einen trapezförmigen Querschnitt auf. Jeweils zwei der Seiten jedes Querschnitts sind vorzugsweise im Wesentlichen in einer tangentialen Richtung angeordnet, wobei die geringere Ausdehnung bei dem Permanentmagneten einen größeren Abstand zur Rotationsachse aufweist. Bei den Blechpaketabschnitten weist die radial außenliegende tangentiale Seite die größere Ausdehnung in der tangentialen Richtung auf. Somit ist ein Ablösen des Permanentmagneten aus dem Spalt aufgrund des Formschlusses mit den Blechpaketabschnitten unterbunden, was eine Sicherheit erhöht. Hierbei sind keine Haltenasen oder dergleichen erforderlich, was eine Herstellung der Blechpaketabschnitte erleichtert. Aufgrund der Trapezform der einzelnen Blechpaketabschnitte weisen diese keine gerundete Oberflächen auf, sodass eine Herstellung und eine Lagerung der Blechpaketabschnitte vereinfacht sind. Somit weist der Querschnitt des Rotors im Wesentlichen lediglich gerade Kanten auf, was eine Lagerung und Herstellung weiter vereinfacht. Zudem ist ein Materialbedarf verringert. Vorzugsweise ist die Magnetisierungsrichtung des Permanentmagneten tangential.

Zur Herstellung eines derartigen Rotors wird insbesondere ein Block aus magnetischem Material erstellt, der beispielsweise quaderförmig ausgestaltet ist. Dieser wird mittels schräger Schnitte in einzelne Permanentmagnete unterteilt, wobei insbesondere mehrere derartige Permanentmagnete zur Erstellung des Rotors herangezogen werden. Hierbei wird aufgrund der Magnetisierungsrichtung insbesondere jeweils der übernächste Permanentmagnet in der tangentialen Richtung aus jeweils dem gleichen Materialblock geschnitten, beispielsweise gesägt. Der jeweils nächste Permanentmagnet entspricht zweckmäßigerweise einem aus dem Materialblock gesägten und um 180° gedrehten Permanentmagneten. In einer weiteren alternativen Ausführungsform ist der Querschnitt des Permanentmagneten im Wesentlichen quaderförmig, und dieser ist in radialer Richtung angeordnet.

Vorzugsweise weist der Rotor eine Anzahl derartiger erster Blechpaketabschnitte auf, die jeweils mittels eines zugeordneten Befestigungselements an dem zweiten Blechpaketabschnitt angebunden sind. Insbesondere weist der Rotor hierbei die gleiche Anzahl an Befestigungselementen wie erster Blechpaketabschnitte auf. Der Rotor weist zweckmäßigerweise lediglich den einzigen zweiten Blechpaketabschnitt auf. Die ersten Blechpaketabschnitte sind insbesondere zueinander baugleich, was die Herstellung vereinfacht. Ferner sind die Befestigungselemente zweckmäßigerweise ebenfalls zueinander baugleich, was Herstellungskosten reduziert. Mittels des zweiten Blechpaketabschnitts wird insbesondere die Grundform des Rotors vorgegeben, und mittels der ersten Blechpaketabschnitte erfolgt eine verbesserte Formung der Magnetfelder und/oder ein Halten des Permanentmagneten. Insbesondere weist hierbei der Rotor eine zu der Anzahl der ersten Blechpaketabschnitte korrespondierende Anzahl an Permanentmagneten auf, sofern der Rotor permanenterregt ausgestaltet ist. Insbesondere sind die ersten Blechpaketabschnitte mit dem jeweiligen Befestigungselement an dem zweiten Blechpaketabschnitt mechanisch direkt oder mechanisch indirekt mittels eines weiteren Bauteils befestigt.

Besonders bevorzugt liegt der zweite Blechpaketabschnitt an der Welle an, vorzugsweise mechanisch direkt. Zweckmäßigerweise umgibt der zweite Blechpaketabschnitt die Welle umfangsseitig. Somit erfolgt eine Kraftübertragung von bzw. zu der Welle mittels des zweiten Blechpaketabschnitts, wobei etwaige auf die ersten Blechpaketabschnitte ausgeübte Kräfte mittels der Befestigungselemente auf den zweiten Blechpaketabschnitt eingeleitet werden. Beispielsweise ist zwischen dem zweiten Blechpaketabschnitt und der Welle eine Nut-Feder-Verbindung erstellt. Alternativ hierzu ist ein weiterer Form- und/oder Kraftschluss zwischen dem zweiten Blechpaketabschnitt und der Welle erstellt. Aufgrund des Anliegens des zweiten Blechpaketabschnitts an der Welle ist eine vergleichsweise geringe Anzahl an unterschiedlichen Bauteilen erforderlich, was Herstellungskosten reduziert.

In einer alternativen Ausführungsform der Erfindung weist der Rotor eine Anzahl derartiger erster Blechpaketabschnitte und eine Anzahl derartiger zweiter Blechpaketabschnitte auf, wobei die Anzahl der ersten Blechpaketabschnitte zweckmäßigerweise gleich der Anzahl der zweiten Blechpaketabschnitte sind. Die Blechpaketabschnitte sind jeweils mittels des Befestigungselements aneinander angebunden, wobei der Rotor hierbei vorzugsweise lediglich ein einziges Befestigungselement aufweist. Das Befestigungselement weist hierbei eine zu der Anzahl der ersten Blechpaketabschnitte und eine zu der Anzahl der zweiten Blechpaketabschnitt korrespondierende Anzahl an Abschnitten auf, die jeweils an einem der ersten Blechpaketabschnitte bzw. an einem der zweiten Blechpaketabschnitte angebunden sind. Beispielsweise sind hierbei die ersten Blechpaketabschnitte baugleich zu den zweiten Blechpaketabschnitten, was Herstellungskosten reduziert. Insbesondere sind diese somit Gleichteile, und eine Anpassung auf eine etwaige Rotorgeometrie erfolgt vorzugsweise mittels der Wahl des Befestigungselements. Hierbei ist eine vergleichsweise freie Formgebung des Befestigungselements möglich, da spezifische elektrische und/oder magnetische Eigenschaften nicht berücksichtigt werden müssen.

Insbesondere liegt das Befestigungselement an der Welle an und umgibt diese zumindest abschnittsweise. Vorzugsweise liegt das Befestigungselement mechanisch direkt, alternativ indirekt über ein weiteres Bauteil, an der Welle an. Beispielsweise ist hierbei zwischen dem Befestigungselement und der Welle ein Formschluss, insbesondere mittels einer Feder-Nut-Verbindung, erstellt. Besonders bevorzugt jedoch ist ein Kraftschluss zwischen dem Befestigungselement und der Welle erstellt, und zwischen diesen ist ein Presssitz realisiert. Infolgedessen weist der Rotor eine verminderte Unwucht auf. Auch ist eine Fertigung vereinfacht. Ferner sind die Blechpaketabschnitte von der Welle auf diese Weise beabstandet. Zweckmäßigerweise ist hierbei das Befestigungselement lediglich ein einziges Teil und somit insbesondere einstückig.

In einer weiteren Alternative weist der Rotor eine Anzahl derartiger erster Blechpaketabschnitte und eine Anzahl derartiger zweiter Blechpaketabschnitte und ein Halteelement auf. Hierbei sind sämtliche Blechpaketabschnitte jeweils mittels eines der Befestigungselemente an dem Halteelement angebunden. Die Anzahl der Befestigungselemente ist somit gleich der Anzahl der ersten Blechpaketabschnitte zuzüglich der Anzahl der zweiten Blechpaketabschnitte. Zum Beispiel sind die ersten und zweiten Blechpaketabschnitte zueinander baugleich. Vorzugsweise liegt das Halteelement an der Welle an, wobei insbesondere ein Presssitz zwischen diesen ausgebildet ist. Das Halteelement ist vorzugsweise hohlzylinderförmig ausgestaltet und beispielsweise aus einem Blechpaket erstellt. Alternativ ist das Halteelement gegossen, beispielsweise aus einem Kunststoff. Insbesondere ist das Halteelement im Wesentlichen einstückig ausgestaltet. Zweckmäßigerweise verlaufen die Befestigungselemente im Wesentlichen in einer radialen Richtung und erstrecken sich zwischen dem Halteelement und dem jeweils zugeordneten Blechpaketabschnitt. Somit ist es ermöglicht, das Halteelement für einen Presssitzes an der Welle zu optimieren, wohingegen die Befestigungselemente auf die magnetischen Eigenschaften angepasst sind. Aufgrund des Presssitzes zwischen dem Halteelement und der Welle ist hierbei eine Unwucht des Rotors verringert. Insbesondere sind jeweils zwei der Befestigungselemente mittels eines Verbindungsstegs mechanisch verbunden, der zweckmäßigerweise aus einem dia- oder paramagnetischen Material erstellt ist. Somit bilden sich in dem Verbindungssteg ebenfalls keine Magnetfelder aus, was den Wirkungsgrad des Rotors verbessert. Aufgrund des Verbindungsstegs sind die beiden Befestigungselemente zueinander stabilisiert, was die Robustheit des Rotors erhöht. Insbesondere ist der Verbindungssteg an zumindest einem der zugeordneten Befestigungselemente, insbesondere an beiden Befestigungselementen, angeformt und somit einstückig mit diesen. Auf diese Weise ist eine mechanische Integrität dieser Baugruppe erhöht. Alternativ hierzu ist der Verbindungssteg aus einem abweichenden Material erstellt, wobei insbesondere die bei Betrieb auf den Verbindungssteg wirkenden Kräfte berücksichtigt werden können. Vorzugsweise verläuft das Verbindungsstück in einer tangentialen Richtung und/oder Umfangsrichtung.

Insbesondere ist das Befestigungselement form- und/oder kraftschlüssig mit dem ersten Blechpaketabschnitt und/oder dem zweiten Blechpaketabschnitt verbunden. Beispielsweise liegt hierbei der erste Blechpaketabschnitt bzw. zweite Blechpaketabschnitt form- und/oder kraftschlüssig in einer Aussparung des Befestigungselements ein. Besonders bevorzugt jedoch liegt das Befestigungselement endseitig form- und/oder kraftschlüssig in einer Aussparung des ersten Blechpaketabschnitts ein. Auf diese Weise ist eine Fertigung des ersten Blechpaketabschnitts erleichtert und ein Verschnitt verringert. Insbesondere weist das in der jeweiligen Aussparung einliegende Ende senkrecht zu der axialen Richtung einen runden oder rechteckförmigen Querschnitt auf. Alternativ hierzu ist der Querschnitt dreieckförmig ausgestaltet. Vorzugsweise ist der Querschnitt achsensymmetrisch bezüglich einer dem Befestigungselement zugeordneten radialen Geraden, was Unwuchten verringert. Aufgrund der Wahl des Querschnitts ist ein vergleichsweise effizienter Formschluss realisiert, wobei eine Robustheit des Endes erhöht ist.

Zur Montage wird zweckmäßigerweise das Befestigungselement in axialer Richtung bzw. eines der Blechpaketabschnitte bezüglich des Befestigungselements in der axialen Richtung bewegt und das Ende in die jeweilige Aussparung eingeschoben. Beispielsweise wird hierbei zunächst das Befestigungselement erhitzt oder abgekühlt. Zumindest jedoch wird eine Temperatur des Befestigungselements, bevorzugt im Vergleich zu dem ersten Blechpaketabschnitt, verändert oder auch die Temperatur des jeweiligen Blechpaketabschnitts wird verändert. Somit erfolgt bei einer Erwärmung eine Erhöhung der Flexibilität oder zumindest ein Ausdehnen, sodass ein Einführen erleichtert ist. Nach Abschluss des Einführens erfolgt insbesondere wieder eine Temperaturangleichung, also insbesondere eine Abkühlung oder eine Erwärmung, und vorzugsweise eine Angleichung der Temperatur des Rotors an eine Betriebs- und/oder Zimmertemperatur. Geeigneterweise erfolgt aufgrund der Erwärmung bzw. Abkühlung eine Veränderung der Ausdehnung, sodass zwischen dem Befestigungselement und dem jeweiligen Blechpaketabschnitt ein Kraftschluss erstellt wird.

Die elektrische Maschine ist beispielsweise ein Generator, bevorzugt jedoch ein Elektromotor, wie ein Synchronmotor, der insbesondere permanenterregt ist. Die elektrische Maschine weist beispielsweise eine Nennleistung zwischen 3kW und 500kW auf, insbesondere zwischen 3kW und 200kW, oder aber zwischen 20kW und 350kW. Beispielsweise ist die Nenndrehzahl der elektrischen Maschine zwischen 100 U/min und 4.000 U/min, zweckmäßigerweise zwischen 100 U/min und 200 U/min oder zwischen 350 U/min und 1.500 U/min.

Die elektrische Maschine umfasst einen Stator und einen Rotor, die mittels eines Luftspaltes voneinander getrennt sind. Der Luftspalt ist im Betrieb der elektrischen Maschine beispielsweise mit Luft oder einem anderen gasförmigen Medium befüllt. Alternativ strömt durch den Luftspalt ein flüssiges Medium, beispielsweise Öl, um insbesondere den Rotor und/oder den Stator zu kühlen. Hierbei ist stets der Rotor von dem Stator beabstandet. Der Rotor ist beispielsweise innerhalb des Stators angeordnet. Mit anderen Worten umgibt der Stator den Rotor umfangsseitig. Hierbei umgibt der Stator den Rotor beispielsweise in der vollständigen axialen Richtung oder zumindest einen Teil hiervon. Mit anderen Worten ist die elektrische Maschine ein Innenläufer. Alternativ umgibt der Rotor den Stator nach Art eines Außenläufers. Der Stator und der Rotor sind geeigneterweise innerhalb eines Gehäuses angeordnet, das die beiden vor etwaigen Beschädigungen und/oder Umwelteinflüssen schützt.

Der Rotor weist ein eine Welle umgebendes Blechpaket auf, das einen sich in einer axialen Richtung erstreckenden ersten Blechpaketabschnitt und einen sich in der axialen Richtung erstreckenden zweiten Blechpaketabschnitt umfasst, die aneinander mittels eines Befestigungselements angebunden sind, das aus einem dia- oder paramagnetischen Material erstellt ist. Insbesondere ist der Rotor drehbar um eine Rotationsachse gelagert, beispielsweise mittels einer Anzahl an Lagern, wobei sich das Blechpaket zweckmäßigerweise in der axialen Richtung zwischen zumindest zweien der Lagern befindet. Beispielsweise sind die Lager Reiblager oder besonders bevorzugt Wälzlager, wie Rollen- oder Kugellager. Zweckmäßigerweise ist die Rotationsachse parallel zur axialen Richtung.

Vorzugsweise ist der Stator elektrisch mit einem Umrichter verbunden, der zum Beispiel ein Bestandteil der elektrischen Maschine ist. Alternativ weist die elektrische Maschine einen Anschluss für den Umrichter auf. Der Stator weist beispielsweise eine Anzahl an Phasen mit jeweils einer Anzahl an elektrischen Spulen auf. Zweckmäßigerweise sind drei Phasen vorhanden, die in einer Dreiecks- oder Sternschaltung miteinander und/oder dem Umrichter elektrisch verbunden sind. Zweckmäßigerweise ist die elektrische Maschine bürstenlos. Zusammenfassend wird unter elektrischer Maschine folglich ein bürstenloser Elektromotor (Gleichstrommotor) oder eine Synchronmaschine, jedoch auch ein Generator verstanden.

Insbesondere ist die elektrische Maschine ein Bestandteil einer Industrieanlage. Zweckmäßigerweise ist die elektrische Maschine ein Bestandteil eines Antriebs, mittels dessen bei Betrieb ein zu erstellendes oder zu bearbeitendes Werkstück zumindest teilweise bearbeitet wird. Bevorzugt ist der Elektromotor ein Bestandteil eines Fahrzeugs, insbesondere eines Fahrrads. Hierfür ist die elektrische Maschine zweckmäßigerweise als Nabenmotor ausgestaltet.

In einer weiteren Ausgestaltungsform der Erfindung ist der Elektromotor ein Bestandteil eines Kraftfahrzeugs, wie eines Nutzkraftfahrzeugs, beispielsweise einer Pistenraupe oder eines Busses. Alternativ hierzu ist der Elektromotor ein Bestandteil eines Personenkraftwagens. Hierbei dient der Elektromotor zweckmäßigerweise dem Antrieb eines Verstellteils des Kraftfahrzeugs. Besonders bevorzugt jedoch dient der Elektromotor dem Vortrieb des Kraftfahrzeugs und ist zweckmäßigerweise mit etwaigen Antriebsrädern des Kraftfahrzeugs wirkverbunden. Mit anderen Worten ist der Elektromotor ein Bestandteil eines Hauptantriebs des Kraftfahrzeugs. Insbesondere wird mittels des Elektromotors etwaige Bremsenergie rekuperiert, so dass der Elektromotor zusätzlich als Generator dient.

Sofern ein Bauteil als erstes, zweites, drittes,... Bauteil bezeichnet wird, ist insbesondere lediglich darunter ein bestimmtes Bauteil zu verstehen. Insbesondere bedeutet dies nicht, dass eine bestimmte Anzahl an derartigen Bauteilen vorhanden ist. So impliziert insbesondere nicht, dass der dritte Permanentmagnet vorhanden ist, sofern der vierte Permanentmagnet vorhanden ist.

Die im Zusammenhang mit dem Rotor/Montage genannten Weiterbildungen und Vorteile sind sinngemäß auch auf den Elektromotor zu übertragen und umgekehrt.

Nachfolgend werden Ausführungsbeispiele der Erfindung anhand einer Zeichnung näher erläutert. Darin zeigen:
- Fig. 1: schematisch ein Kraftfahrzeug mit einem in einer Schnittdarstellung entlang einer axialen Richtung dargestellten Elektromotor mit einem Rotor,
- Fig. 2: perspektivisch ausschnittsweise den Rotor mit einem Blechpaket und V-förmig angeordneten Permanentmagneten,
- Fig. 3: eine Abänderung des in Fig. 2 gezeigten Rotors ausschnittsweise in einer Frontalansicht,
- Fig. 4 - 7: gemäß Fig. 2 bzw. Fig. 3 weitere Ausführungsformen des Rotors mit V-förmig angeordneten Permanentmagneten,
- Fig. 8, 9: gemäß Fig. 2 bzw. Fig. 3 weitere Ausführungsformen des Rotors mit U-förmig angeordneten Permanentmagneten,
- Fig. 10, 11: gemäß Fig. 2 bzw. Fig. 3 weitere Ausführungsformen des Rotors mit U-förmigen Spalten,
- Fig. 12 - 15: gemäß Fig. 2 bzw. Fig. 3 weitere Ausführungsformen des Rotors mit radial angeordneten Permanentmagneten,
- Fig. 16: ausschnittsweise in einer Frontalansicht den Rotor mit trapezförmigen Permanentmagneten,
- Fig. 17: ein Verfahren zur Herstellung des Rotors gemäß Fig. 16, und
- Fig. 18 - 21: jeweils eine unterschiedliche Ausgestaltungsform des Befestigungselements.

Einander entsprechende Teile sind in allen Figuren mit den gleichen Bezugszeichen versehen.

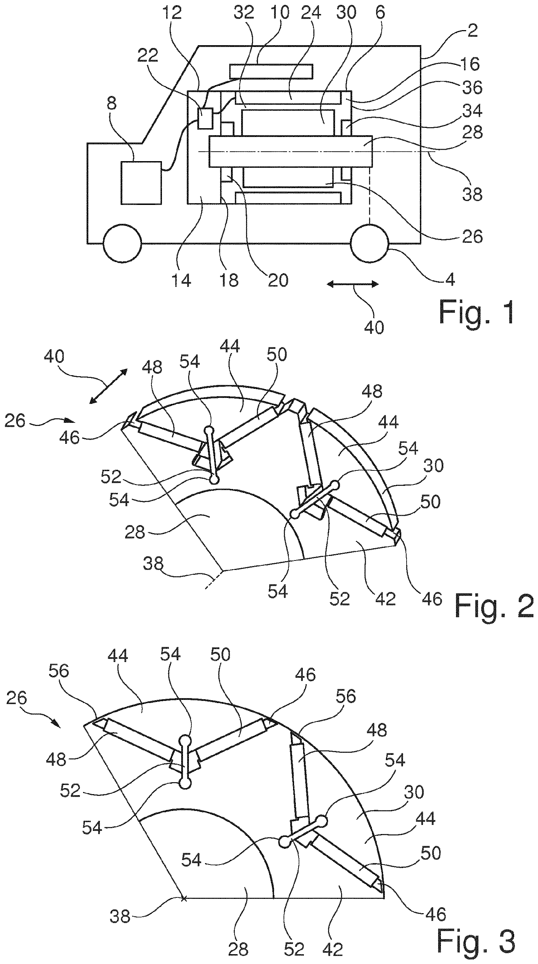

In Figur 1 ist schematisch vereinfacht ein Fahrzeug 2 in Form eines Kraftfahrzeugs, mit Antriebsrädern 4 dargestellt. Die Antriebsräder 4 sind in Wirkverbindung mit einer elektrischen Maschine 6, die ein bürstenloser Elektromotor, nämlich ein bürstenloser Synchronmotor ist. Die elektrische Maschine 6 ist elektrisch mit einer Batterie 8 verbunden, welche somit die elektrische Maschine 6 speist. Bei einem generatorischen Betrieb der elektrischen Maschine 6 wird elektrische Energie zu der Batterie 8 geleitet und diese somit aufgeladen. Die elektrische Maschine 6 ist signaltechnisch mit einem Steuergerät 10 gekoppelt. Mittels des Steuergeräts 10 werden Benutzerwünsche eines Fahrers des Kraftfahrzeugs 2 erfasst und in entsprechende Steuersignale für die elektrische Maschine 6 umgesetzt.

Die elektrische Maschine 6 weist ein Gehäuse 12 mit einem Elektronikfach 14 und einem Maschinenfach 16 auf, die mittels eines B-seitigen Lagerschilds 18 getrennt sind, welches ein erstes Lager 20 in Form eines Kugellagers aufweist. In dem Elektronikfach 14 ist ein Umrichter 22 mit einer nicht näher dargestellten B6-Schaltung angeordnet, der mit dem Steuergerät 10 und der Batterie 8 verbunden ist. Mittels des Umrichters 22 erfolgt bei Betrieb eine Bestromung eines Stators 24, der eine Anzahl an Elektromagneten aufweist, die zu drei Phasen verschaltet sind. Die Phasen selbst sind zu einer Dreiecks- oder Sternschaltung verschaltet. Der Stator 24 umgibt umfangsseitig einen Rotor 26, der eine Welle 28 aus einem Edelstahl aufweist. Die Welle 28 ist abschnittsweise von einem hohlzylindrisch ausgestalteten Blechpaket 30 umgeben, welches drehfest an der Welle 28 angebunden ist. Das Blechpaket 30 ist unter Ausbildung eines Luftspalts 32 von dem Stator 24 beabstandet, welcher somit den Rotor 26 umfangsseitig umgibt.

Die Welle 28 ist mittels des ersten Lagers 20 und eines zweiten Lagers 34, welches ein Bestandteil eines A-seitigen Lagerschilds 36 ist, drehbar um eine Rotationsachse 38 gelagert, wobei sowohl die Welle 28 als auch das Blechpaket 30 konzentrisch zu der Rotationsachse 38 angeordnet sind. Parallel zur Rotationsachse 38 ist eine axiale Richtung 40 (Axialrichtung).

In Figur 2 ist perspektivisch ausschnittsweise eine erste Ausgestaltungsform des Rotors 26 in einer Schnittdarstellung senkrecht zur Rotationsachse 38 dargestellt. Die Welle 28 ist als eine Vollwelle ausgestaltet und wird umfangsseitig von einem zweiten Blechpaketabschnitt 42 umgeben, welcher einen im Wesentlichen sternförmigen Querschnitt aufweist. Der zweite Blechpaketabschnitt 42 besteht im Wesentlichen aus einer Anzahl in der Axialrichtung 40 übereinander gestapelter und miteinander fluchtender sowie gegeneinander isolierter einzelner Bleche, die aus einem Weicheisen oder Trafoeisen erstellt sind.

Ferner weist das Blechpaket 30 insgesamt sechs erste Blechpaketabschnitte 44 auf, die zueinander baugleich und drehsymmetrisch bezüglich der Rotationsachse 38 angeordnet sind. Jeder erste Blechpaketabschnitt 44 weist in der Axialrichtung 40 die gleiche Ausdehnung wie der zweite Blechpaketabschnitt 42 auf und ist von diesem unter Ausbildung eines jeweiligen Spalts 46, der senkrecht zur Rotationsachse 38 einen V-förmigen Querschnitt aufweist, beabstandet. Die Spalte 46 sind hierbei auf der Umfangsseite des Blechpakets 30 geöffnet.

Innerhalb des Spalts 46 liegt jeweils ein quaderförmiger Permanentmagnet 48 und ein zweiter Permanentmagnet 50 ein, der baugleich zu dem Permanentmagneten 48 ist. Die Permanentmagneten 48, 50 sind aus einem Ferrit oder Selten-Erd-Legierung erstellt und werden mittels Vorsprüngen des jeweils zugeordneten ersten Blechpaketabschnitts 44 bzw. des zweiten Blechpaketabschnitts 42 in dem Spalt 46 gehalten. Hierbei ist jedem der Schenkel des V-förmigen Querschnitts des Spalts 46 entweder der Permanentmagnet 48 oder der zweite Permanentmagnet 50 zugeordnet.

Hierbei ist jedem der ersten Blechpaketabschnitte 44 der gleiche magnetische Pol des Permanentmagneten 48 sowie des zweiten Permanentmagneten 50 zugeordnet. Mit anderen Worten liegt an jedem der ersten Blechpaketabschnitte 44 entweder lediglich ein Nordpol oder lediglich ein Südpol an, wobei in einer tangentialen Richtung benachbarten ersten Blechpaketabschnitten 44 unterschiedliche magnetische Pole zugeordnete sind. Im Übergang zwischen den beiden Schenkeln des Querschnitts ist hierbei um das Befestigungselement 52 eine vergrößerte Aussparung realisiert, was eine Formung der mittels der Permanentmagneten 48, 50 bereitgestellten Magnetfelder verbessert.

Jeder der ersten Blechpaketabschnitte 44 wird jeweils mittels eines zugeordneten zweiten Befestigungselements 52 an dem zweiten Blechpaketabschnitt 42 gehalten und ist somit an diesem angebunden. Die Befestigungselemente 52 sind baugleich und aus einem para- oder diamagnetischen Material, beispielsweise einem Aluminium, Kunststoff oder Edelstahl, erstellt. Der Querschnitt jedes der Befestigungselemente 52 verläuft im Wesentlichen in jeweils einer zugeordneten radialen Richtung, also entlang einer jeweils zugeordneten radialen Geraden, und ist im Wesentlichen hantelförmig ausgestaltet. Mit anderen Worten weisen die beide Enden des Befestigungselements 52 senkrecht zu der axialen Richtung 40 einen runden Querschnitt auf, die in jeweils einer zugeordneten Aussparungen 54 des ersten und des zweiten Blechpaketabschnitts 42 form- und kraftschlüssig einliegen.

Zusammenfassend sind die ersten Blechpaketabschnitte 44 mittels des jeweiligen Befestigungselements 52 und mittels des jeweiligen Permanentmagneten 48 in mechanischem Kontakt mit dem zweiten Blechpaketabschnitt 42. In einer nicht näher dargestellten Ausführungsform sind die verbleibenden Bereiche der Spalte 46 mit einem Kunststoff befüllt und das Blechpaket 30 ist somit vergossen. Der Verguss ist hierbei ebenfalls aus einem para-oder diamagnetisches Material. Aufgrund des Vergusses ist eine Stabilität weiter erhöht und eine Korrosion des Blechpakets 30 vermieden.

In Figur 3 ist eine Abwandlung des in Figur 2 gezeigten Rotors 26 ausschnittsweise in einer Frontalansicht oder Schnittdarstellung senkrecht zur Rotationsachse 38 gezeigt. Hierbei ist jeder der Spalte 46 umfangsseitig geschlossen und die ersten Blechpaketabschnitte 44 sind somit mittels eines die jeweiligen Spalte 46 verschließenden Verbindung 56 verbunden. Die Verbindung 56 ist an den ersten sowie dem zweite Blechpaketabschnitt 42, 44 angeformt, sodass diese einstückig miteinander sind. Folglich ist jede Blechlagen des Blechpakets 30 einstückig, was eine Fertigung vereinfacht. Damit ist ein Ausbreiten von Magnetfeldlinien zwischen den ersten Blechpaketabschnitten 44 und dem zweiten Blechpaketabschnitt 42 über die Verbindungen 56 ermöglicht, was den Wirkungsgrad verringert. Dies ist jedoch vergleichsweise gering, da die Verbindungen 56 vergleichsweise filigran ausgeführt sind, weil die mechanischen Kräfte aufgrund der Befestigungselemente 52 aufgenommen werden.

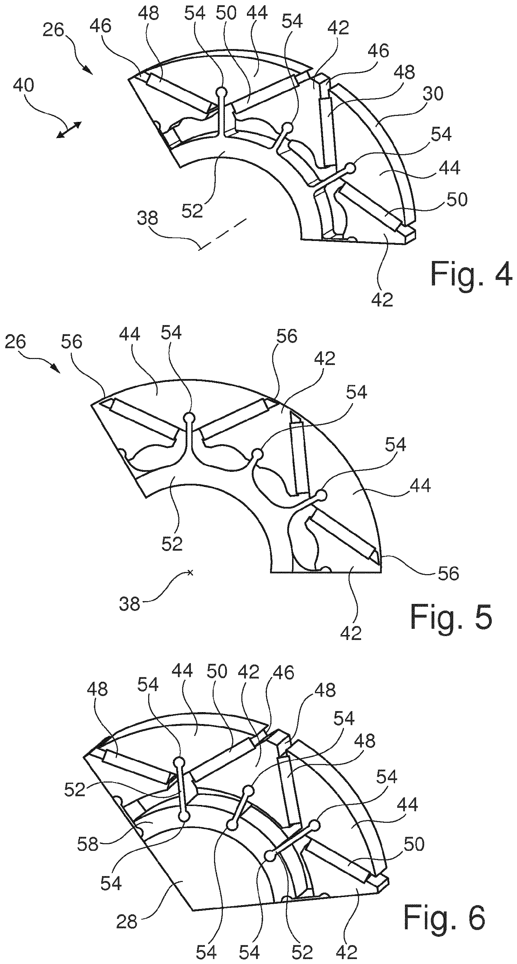

In Figur 4 ist gemäß der Darstellung der Figur 2 eine alternative Ausführungsform des Rotors 26 gezeigt. Der erste Blechpaketabschnitt 44 sowie die Spalte 46 als auch die Permanentmagnete 48 und die zweiten Permanentmagnete 50 sind hierbei nicht abgewandelt. Jedoch sind der zweite Blechpaketabschnitt 42 und die Befestigungselemente 52 verändert. Der zweite Blechpaketabschnitt 42 ist nunmehr aufgeteilt auf insgesamt 6 einzelne zweite Blechpaketabschnitte 42, die jeweils im Wesentlichen dreieckförmig ausgestaltet sind. Ferner ist lediglich ein einziges Befestigungselement 52 vorhanden, welches im Montagezustand an der nicht dargestellten Welle 28 kraftschlüssige umfangsseitig anliegt. Hierfür weist das Befestigungselement 52 einen hohlzylindrischen Abschnitt auf, an dem in radialer Richtung verlaufende Fortsätze angebunden sind, welche jeweils endseitig in den Aussparungen 54 der ersten Blechpaketabschnitte 44 einliegende Enden tragen. Auch die zweiten Blechpaketabschnitte 42 weisen derartige Aussparungen 54 auf, innerhalb derer jeweils die radial nach außen vorspringenden Fortsätze des Befestigungselements 52 in gleicher Weise kraft- und formschlüssig einliegen. Hierbei weisen die den ersten Blechpaketabschnitten 44 zugeordneten Befestigungselemente 52 in radialer Richtung eine vergrößerte Ausdehnung auf. Die zweiten Blechpaketabschnitte 42 sind zueinander baugleich, sodass Gleichteile verwendet werden können.

In Figur 5 ist eine Weiterentwicklung der in Figur 4 gezeigten Ausführungsform entsprechend der Darstellung der Figur 3 gezeigt. Als Unterschied sind ebenfalls lediglich die Verbindungen 56 vorhanden, sodass die zweiten Blechpaketabschnitte 42 einstückig mit den ersten Blechpaketabschnitten 44 sind. Zusammenfassend sind bei den in Figur 4 und Figur 5 gezeigten Ausführungsformen die gleiche Anzahl an ersten Blechpaketabschnitten 44 wie an zweiten Blechpaketabschnitten 42 vorhanden, die jeweils mittels des Befestigungselements 52 aneinander angebunden sind, wobei das Befestigungselement 52 an der Welle 28 anliegt und diese mittels eines hohlzylindrischen Abschnitts umgibt.

In Figur 6 ist gemäß Figur 4 eine Weiterentwicklung gezeigt, wobei wiederum die ersten Blechpaketabschnitt 44, die Spalte 46, die Permanentmagnete 48 sowie die zweiten Permanentmagnete 50 nicht verändert sind. Der Rotor 26 weist ein hohlzylindrisch ausgestaltetes Halteelement 58 auf, welches zu den ersten als auch zweiten Blechpaketabschnitten 44, 42 beabstandet ist und die Welle 28 umfangsseitig unter Ausbildung eines Presssitzes gibt. Das Halteelement 58 ist als Blechpaket oder einstückig als ein Teil ausgestaltet. Das Halteelement 58 weist ebenfalls die Aussparungen 54 auf, innerhalb derer jeweils ein hantelförmig ausgestaltetes Befestigungselements 52 angeordnet ist. Hierbei sind insgesamt zwölf derartige Befestigungselemente 52 vorhanden, wobei jedem der ersten als auch zweiten Blechpaketabschnitte 44, 42 eines der Befestigungselemente 52 zugeordnet ist. Somit sind alle Blechpaketabschnitte 42, 44 mittels jeweils eines zugeordneten Befestigungselements 52 an dem Halteelement 58 angebunden und über dieses sind die ersten Blechpaketabschnitte 44 an den zweiten Blechpaketabschnitten 42 angebunden. In einer nicht näher dargestellten Alternative ist der Bereich zwischen den Blechpaketabschnitt 42, 44 und dem Halteelement 58 mit dem Verguss befüllt.

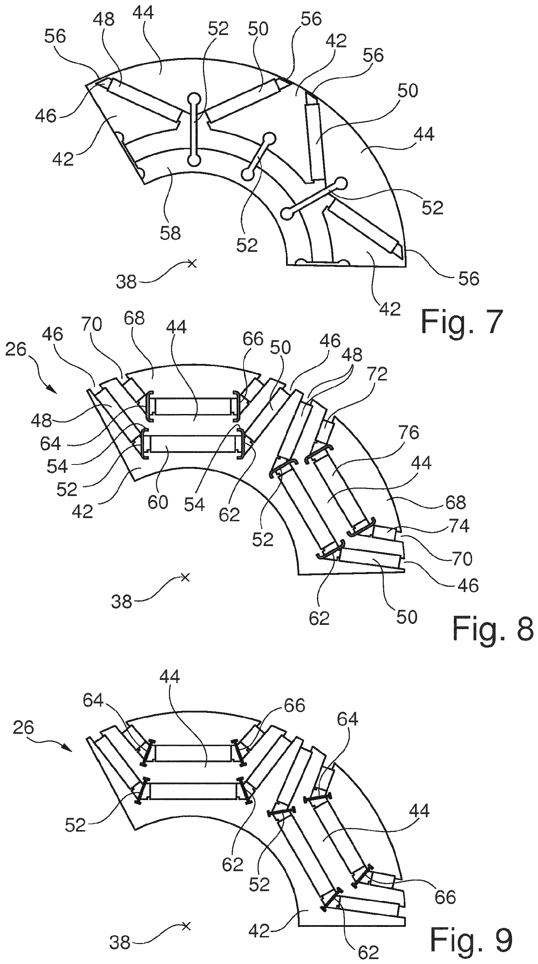

In Figur 7 ist eine Abwandlung der in Figur 6 gezeigten Ausführungsform gezeigt, wobei lediglich zusätzlich die Verbindungen 56 vorhanden sind, sodass sämtliche erste Blechpaketabschnitte 44 einstückig mit den zweiten Blechpaketabschnitten 42 ist.

In Figur 8 ist gemäß Figur 7 eine Abwandlung des Rotors 26 gezeigt. Hierbei ist wieder wiederum lediglich ein einziger zweiter Blechpaketabschnitt 42 vorhanden. Auch sind wiederum sechs erste Blechpaketabschnitte 44 vorhanden, die jedoch im Wesentlichen wannenförmigen ausgestaltet sind. Die Spalte 46 weisen nunmehr senkrecht zur Rotationsachse 38 einen L-förmigen Querschnitt auf, wobei die beiden äußeren Schenkel einen Winkel von zwischen 40° und 80° miteinander einschließen. In jedem der Spalte 46 sind jeweils der zugeordnete Permanentmagnet 48 sowie der zugeordnete zweite Permanentmagnete 50 angeordnet, die jeweils quaderförmig und zueinander baugleich sind. Ferner sind auch sämtliche Permanentmagnete 48 baugleich. Die Permanentmagnete 48 und die zweiten Permanentmagnete 50 befinden sich in den seitlichen Schenkeln der jeweiligen Form des Querschnitts des Spalts 46. Im mittleren Schenkel ist jeweils ein dritter Permanentmagnet 60 angeordnet. Die Permanentmagnete 48, die zweiten Permanentmagnete 50 und die dritten Permanentmagnete 60 werden mittels nasenförmiger Vorsprünge des zweiten Blechpaketabschnitts 42 in dem jeweiligen Spalt 46 gehalten. Jedem der ersten Blechpaketabschnitte 44 ist von den zugeordneten Permanentmagneten 48, 50, 60 jeweils der gleiche magnetische Pole zugeordnet und liegt an diesem an.

Jeder der ersten Blechpaketabschnitte 44 ist mittels des jeweils zugeordneten Befestigungselements 52 und eines dritten Befestigungselements 62, welches baugleich zu dem jeweiligen Befestigungselement 52 jedoch in einer anderen Weise orientiert ist, an dem zweiten Blechpaketabschnitt 42 gehalten. Das Befestigungselement 52 ist wiederum aus einem para-oder diamagnetischen Material erstellt und weist einen im Wesentlichen U-förmigen Querschnitt senkrecht zur Rotationsachse 38 auf, wobei die unterschiedlichen Enden jeweils den unterschiedlichen Blechpaketabschnitten 42, 44 zugeordnet sind. Hierbei wird der jeweiligen dritte Permanentmagnet 60 in tangentialer Richtung von dem Befestigungselement 52 und dem dritten Befestigungselement 62 umgeben, die von dem dritten Permanentmagneten 60 beabstandet sind.

An jedem ersten Blechpaketabschnitt 44 ist mittels eines jeweiligen zweiten Befestigungselements 64 und einem vierten Befestigungselements 66, die baugleich zu dem Befestigungselement 52 bzw. dem dritten Befestigungselement 62 sind, ein dritter Blechpaketabschnitt 68 unter Ausbildung eines zweiten Spalts 70 angebunden, der ebenfalls senkrecht zur Rotationsachse 38 einen U-förmigen Querschnitt aufweist. Hierbei ist jeder der Schenkel des Querschnitts des zweiten Spalts 70 parallel zu jeweils einem der Schenkel des Querschnitts des jeweiligen Spalts 64. In jedem zweiten Spalt 70 ist ein vierter Permanentmagnet 72 und ein baugleicher fünfter Permanentmagnet 74 angeordnet, die den jeweils außen liegenden Schenkeln des zweiten Spalts 70 zugeordnet sind. Dazwischen ist ein sechster Permanentmagnet 76 angeordnet, der somit im Wesentlichen in tangentialer Richtung läuft. Die vierten, fünften und sechsten Permanentmagneten 72, 74, 76 werden mittels Nasen und Vorsprüngen des jeweils zugeordneten ersten Blechpakets 44 gehalten, welches ebenfalls Vorsprünge für die in dem Spalt 46 angeordneten Permanentmagnete 48, 60, 50 aufweist. Hierbei unterscheiden sich die an dem jeweiligen ersten Blechpaket 44 anliegenden Magnetpole zwischen den in dem Spalt 46 und den zweiten Spalts 70 angeordneten Permanentmagneten 40, 50, 60, 72, 74, 76, sodass die jeweilige Magnetfeldlinien im Wesentlichen geradlinig durch den jeweiligen ersten Blechpaketabschnitt 44 hindurch führen. Folglich liegen an dem jeweils zugeordneten dritten Blechpaketabschnitt 68 jeweils die gleichen magnetischen Pole des vierten, fünften und sechsten Magneten 72, 74, 76 an. Zudem weist der dritte Blechpaketabschnitt 68 Vorsprünge zur Stabilisierung der vierten und fünften Permanentmagnete 72, 74 auf.

In Figur 9 ist eine Abwandlung des in Figur 8 gezeigten Rotors 26 dargestellt. Hierbei ist lediglich die Form der Befestigungselemente 52, der dritten Befestigungselemente 62, der zweiten Befestigungselemente 64 und der vierten Befestigungselemente 66 abgewandelt, welche eine Doppel-T-Träger-förmigen Querschnitt aufweisen. Auch ist die Position der Befestigungselemente 52, 62, 64, 66 in den Übergang zwischen den Schenkeln des jeweiligen Spalts 46, 70 gerückt. Die Aussparungen 54 des zweiten Blechpaketabschnitts 42 sowie der ersten als auch dritten Blechpaketabschnitte 44, 68 ist auf die geänderte Form angepasst.

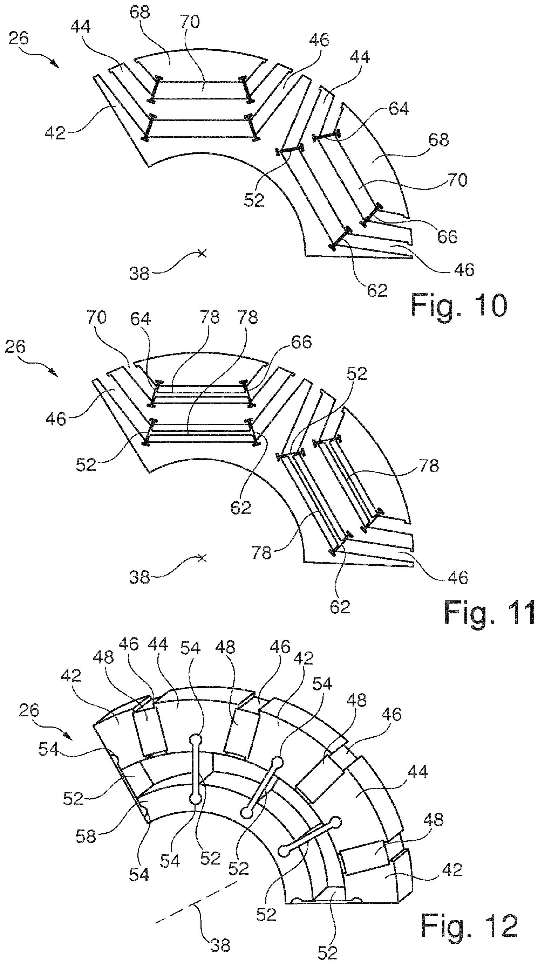

In Figur 10 ist eine weitere Abwandlung des Rotors 26 gezeigt, bei dem im Vergleich zur vorherigen Ausführungsform im Wesentlichen lediglich sämtliche Permanentmagnete 48, 50, 60, 72, 74, 76 weggelassen sind. Ferner sind auch etwaige Nasen des ersten und des zweiten Blechpaketabschnitts 42, 44 weggelassen. Ansonsten ist der Rotor 26 nicht verändert. Dieser ist somit nicht permanent erregt und die Magnetfelder innerhalb des Rotors 26 werden mittels Induktion erstellt und mittels der Spalte 46, 70 geformt. Folglich ist die diesen Rotor 28 aufweisende elektrische Maschine 6 eine Reluktanz-elektrische Maschine, und somit insbesondere ein Synchron-Reluktanzmotor. Hierbei sind die einzelnen Blechpaketabschnitte 42, 44, 68 jeweils lediglich mittels der zugeordneten Befestigungselemente 52, 62, 64, 66 in direktem mechanischem Kontakt. In einer nicht näher dargestellten Variante sind die Spalte 46, 70 mit einem Verguss befüllt, welcher aus einem para- oder diamagnetischen Material erstellt ist.

In Figur 11 ist eine Abwandlung des in Figur 10 dargestellten Rotors 26 gezeigt. Hierbei sind jedes Befestigungselement 52 sowie jedes dritte Befestigungselement 62, die dem gleichen Spalt 46 zugeordnet sind, mittels eines in tangentialer Richtung verlaufenden Verbindungssteg 78 aneinander angebunden, der an die beiden Befestigungselemente 52, 62 angeformt und somit einstückig mit diesen ist. Folglich ist der Verbindungssteg 78 ebenfalls aus dem gleichen dia- bzw. paramagnetischen Material. Auch an jedem zweiten und vierten Befestigungselement 64, 66 des gleichen zweiten Spalts 70 ist ein derartiger Verbindungssteg 78 angeformt. Aufgrund der Verbindungsstege 78 ist eine Stabilität erhöht. Die Verbindungsstege 78 befinden sich im Wesentlichen an der Stelle des dritten bzw. sechsten Permanentmagneten 60, 76 der in Figur 9 gezeigten Ausführungsform.

In Figur 12 ist eine weitere Abwandlung des Rotors 26 gezeigt, wobei das Halteelement 58 im Wesentlichen der in Figur 6 gezeigten Ausführung entspricht. Es sind wiederum sechs erste und sechs zweite Blechpaketabschnitte 42, 44 vorhanden, die jedoch zueinander baugleich sind und in tangentialer Richtung abwechselnd angeordnet sind. Die Blechpaketabschnitt 42, 44 sind ringabschnittsförmig ausgestaltet, und zwischen diesen ist in der tangentialen Richtung jeweils der Spalt 46 vorhanden, der quaderförmig ausgestaltet ist. Innerhalb der Spalte 46 ist wiederum jeweils einer der Permanentmagnete 48 angeordnet, die jeweils in radialer Richtung angeordnet sind. Hierbei ist die Magnetisierungsrichtung der Permanentmagneten 48 tangential, wobei sich die Richtung der in tangentialer Richtung benachbarten Permanentmagneten 48 unterscheidet.

Die Befestigungselemente 52 weisen wiederum einen im Wesentlichen hantelförmigen Querschnitt auf und liegen in entsprechend Aussparungen 54 der Blechpaketabschnitte 42, 44 bzw. des Halteelements 58 ein. Die Permanentmagnete 48 sind mittels in tangentialer Richtung vorspringenden Nasen der Blechpaketabschnitte 42, 44 vor einem Ablösen in radialer Richtung gesichert. Zwischen den Blechpaketabschnitten 42, 44 und dem Halteelement 58 sind Freiräume geschaffen, die in einer nicht näher dargestellten Ausführungsform der Erfindung mit dem Verguss befüllt sind.

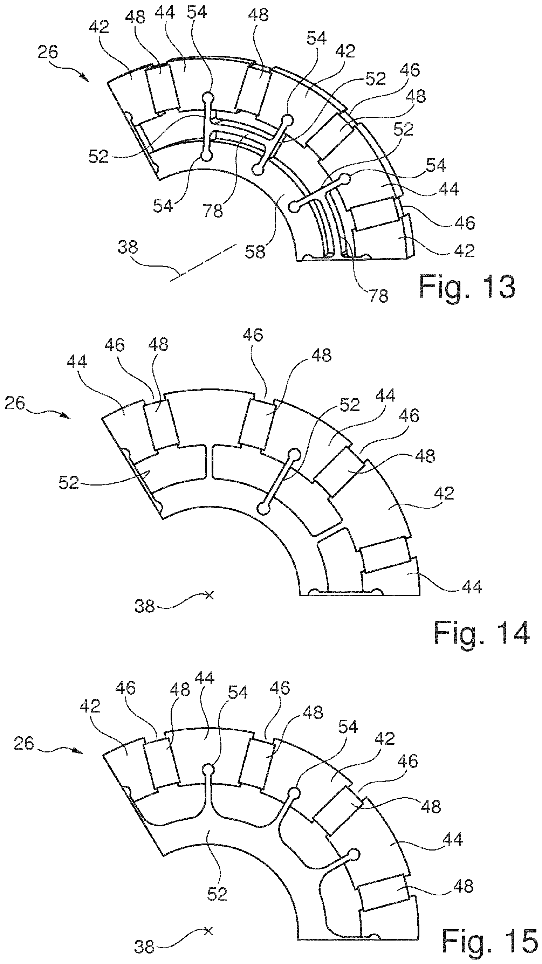

In Figur 13 ist eine Abwandlung des in Figur 12 gezeigten Rotors 26 gezeigt, wobei in Tangentialrichtung jeweils benachbarte Befestigungselemente 52 mittels des Verbindungsstegs 78 verbunden ist, der an den jeweiligen Befestigungselementen 52 angeformt und somit einstückig mit diesen ist. Die Verbindungsstege 78 sind hierbei gebogen ausgestaltet.

In Figur 14 ist eine weitere Ausgestaltungsform des Rotors 26 gezeigt, wobei die ersten Blechpaketabschnitte 44 sowie die Permanentmagnete 48 der vorhergehenden Ausführungsform entsprechen. Das einzige Halteelement 58 ist jedoch nicht vorhanden, und es ist lediglich ein einziger zweiter Blechpaketabschnitt 42 vorhanden, an dem die ersten Blechpaketabschnitte 44 mit dem jeweils zugeordneten Befestigungselement 52 angebunden sind. Hierbei weist der zweite Blechpaketabschnitt 42 das im vorhergehenden Ausführungsbeispielen gezeigte Halteelement 58 auf, an dem die ringsegmentartigen Abschnitte mittels jeweils Stegen angeformt sind.

In Figur 15 ist eine weitere Ausgestaltungsform des Rotors 26 gezeigt. Die ersten und zweiten Blechpaketabschnitte 42, 44 sowie die Permanentmagneten 48 als auch die jeweilige Anordnung entspricht der in Figur 12 gezeigten Variante. Jedoch ist lediglich ein einziges Befestigungselement 52 vorhanden, an dem sämtliche Blechpaketabschnitte 42, 44 angebunden sind. Hierbei wird ebenfalls die in Figur 12 mittels des Halteelements 58 bereitgestellte Funktion mit dem Befestigungselement 52 realisiert, welches somit einen hohlzylindrischen Abschnitt aufweist, der im Montagezustand an der Welle 28 anliegt.

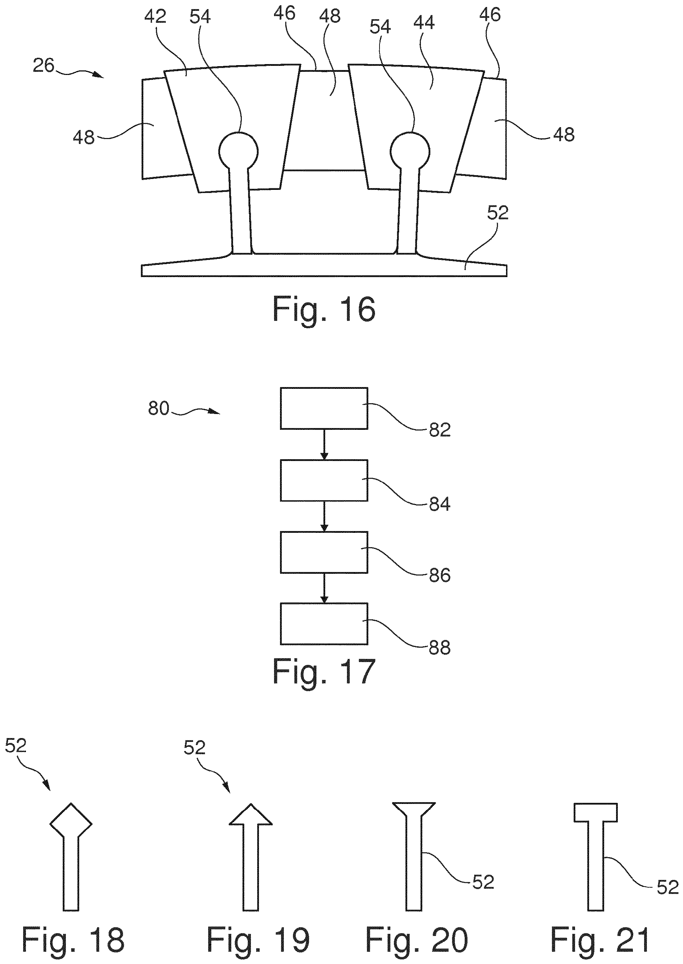

In Figur 16 ist eine Abwandlung des in Figur 15 gezeigten Rotors 26 ausschnittsweise gezeigt, wobei die Anzahl der ersten und zweiten Blechpaketabschnitte 42, 44 sowie der Radius des Rotors 26 erhöht ist. Auch hier weist das Befestigungselement 52 den an der nicht näher dargestellten Welle anliegenden hohlzylindrischen Abschnitt auf, an dem die in radialer Richtung verlaufenden Fortsätze angeformt sind, die in den entsprechenden Aussparungen 54 jedes Blechpaketabschnitts 42, 44 einliegen. Der Querschnitt der Blechpaketabschnitte 42, 44 senkrecht zur Rotationsachse 38 ist trapezförmig ausgestaltet, wobei die Ausdehnung in tangentialer Richtung mit zunehmendem Abstand zu der Rotationsachse 38 zunimmt.

Die sich zwischen den jeweils in tangentialer Richtung benachbarten Blechpaketabschnitte 42, 44 befindenden Spalte 46 weisen somit ebenfalls einen trapezförmigen Querschnitt auf, wobei die Ausdehnung in tangentialer Richtung mit zunehmendem Abstand zur Rotationsachse 38 abnimmt. In jedem der Spalte 46 liegt jeweils einer der trapezförmigen Permanentmagnete 48 an, die in tangentialer Richtung formschlüssig an den jeweils benachbarten Blechpaketabschnitt 42,44 anliegen. Aufgrund einer derartigen Ausgestaltungsform der Spalte 46 ist ein Ablösen der Permanentmagnete 48 in Radialrichtung nach außen bei einer Rotationsbewegung des Rotors 26 nicht möglich.

In Figur 17 ist ein Verfahren 80 zur Herstellung eines derartigen Rotors 26 gezeigt. In einem ersten Arbeitsschritt 82 werden zunächst die ersten und die zweiten Blechpaketabschnitte 42, 44 bereitgestellt. In einem zweiten Arbeitsschritt 84 wird zunächst ein Magnetblock erstellt. Hierfür wird beispielsweise ein Ferritpulver zunächst mittels Sintern zu einem quaderförmigen Block gepresst. Aus dem Block werden mittels schrägen Schnitten die Permanentmagnete 48 mit dem trapezförmigen Querschnitt geschnitten. Die auf diese Weise erstellte Permanentmagneten 48 werden sortiert, wobei der jeweils übernächste Permanentmagnet 48 um 180° gedreht und derart angeordnet wird, dass die in Figur 16 gezeigte Anordnung erstellt ist. Hierbei ist die Magnetisierungsrichtung der jeweils in tangentialer Richtung benachbarten Permanentmagneten 48 entgegengesetzt gerichtet.

In einem sich anschließenden dritten Arbeitsschritt 86 werden zwischen jeweils benachbarten Permanentmagneten 48 jeweils einer der ersten oder zweiten Blechpaketabschnitte 42, 44 angeordnet und diese mittels der Befestigungselemente 52 aneinander angebunden, wobei beispielsweise das Halteelement 58 vorhanden ist oder nicht. Zur Verbindung werden zunächst das bzw. die Befestigungselemente 52 abgekühlt, sodass diese ein verringertes Volumen aufweisen. In diesem Zustand werden das bzw. die Befestigungselemente 52 in die jeweils zugeordneten Aussparungen 54 in der axialen Richtung 40 eingeführt. In einem sich anschließenden vierten Arbeitsschritt 88 erfolgt eine Temperaturangleichung des bzw. der Befestigungselemente 52 und der Blechpaketabschnitte 42, 44. Infolgedessen wird ein Form- und Kraftschluss zwischen diesen erstellt. Gegebenenfalls wird der Rotor 26 zusätzlich noch mit dem Verguss versehen.

In Figur 18 ist eine Abwandlung des Befestigungselements 52 bzw. des Fortsatzes des Befestigungselements 52 gezeigt. Das Freiende, welches im Montagezustand in der zugeordneten Aussparungen 54 einliegt, ist quadratisch, wobei das Ende in der radialen Richtung eine Spitze des Rechtecks bildet. In Figur 19 ist das Ende dreieckförmig ausgestaltet, wobei wiederum das Ende in der Radialrichtung die Spitze des gleichschenkligen Dreiecks bildet. Bei dem in Figur 20 dargestellten Befestigungselement 52 ist das Ende ebenfalls mittels eines gleichschenkeligen Dreiecks gebildet, wobei jedoch das Ende in der radialen Richtung durch eine im Wesentlichen in tangentialer Richtung verlaufende Seite des gleichschenkeligen Dreiecks gebildet wird. In Figur 21 ist eine letzte Ausführungsform des Befestigungselements 52 gezeigt, wobei das Ende in radialer Richtung senkrecht zur Rotationsachse 38 einen quaderförmigen Querschnitt aufweist, sodass das Befestigungselement 52 in diesem Abschnitt zumindest teilweise T-förmig ausgestaltet ist. Die in den Figuren 18 bis ein 21 gezeigten Ausgestaltungsformen des Befestigungselements 52 sind jeweils achsensymmetrisch bezüglich einer jeweils zugeordneten radialen Geraden, entlang derer sich das jeweilige Befestigungselement 52, oder zumindest der Fortsatz, im Montagezustand erstreckt.

Zusammenfassend ist das Befestigungselement 52 vorhanden, das als Streusteg wirkt und aus einem unmagnetischen Material gefertigt ist, also aus einem paramagnetischen oder diamagnetischen Material, und die einzelnen Komponenten des Rotors 26, nämlich die Blechpaketabschnitte 42, 44, 68, zusammenhalten. Die Blechpaketabschnitte 42, 44, 68 sind mit den Aussparungen 54 versehen, in denen die jeweiligen Befestigungselemente 52, 62, 64, 66 in Axialrichtung 40 zur Montage eingeschoben werden. Alternativ ist das Befestigungselement 52 einstückig ausgestaltet und wird in die entsprechenden Aussparungen 54 ebenfalls in der Axialrichtung 40 eingeschoben. Das bzw. die Befestigungselemente 52, 62, 64, 66 sind beispielsweise aus einem Aluminium, Edelstahl oder Kunststoff hergestellt. Die Form und Anzahl der Befestigungselemente 52, 62, 64, 66 sowie die Anzahl ist abhängig von der Drehzahl und der Motortopologie ausgewählt. Die Blechpaketabschnitte 42, 44, 68 sind beispielsweise geklebt oder stanzpaketiert und passend toleriert, um die Montage der Befestigungselemente 52, 62, 64, 66 zu ermöglichen. Zur Montage werden die Befestigungselemente 52, 62, 64, 66 beispielsweise erhitzt oder abgekühlt, um die Steifigkeit und Stabilität des Rotors 26 zu erhöhen.

Aufgrund der Befestigungselemente 52, 62, 64, 66 werden Streuflüsse zwischen den Permanentmagneten 48, 50, 60, 72, 74, 76 unterbrochen, was eine Leistung der elektrischen Maschine 6 erhöht. Die Abmessungen der Befestigungselemente 52, 42, 44, 66 sind unabhängig von der Dicke der einzelnen Bleche der Blechpaketabschnitte 42, 44, 68 und können somit lediglich auf die mechanische Festigkeit hin optimiert werden. Infolgedessen wird eine Trennung zwischen der elektromagnetischen Leistungsfähigkeit und der maximalen Drehzahl der elektrischen Maschine 6 erreicht. So ist es möglich, vergleichsweise hohe Drehzahlen bei minimalem Leistungsverlust zu erreichen.

Aufgrund der Trennung der direkten Verbindung zwischen den Blechpaketabschnitten 42, 44, 68 und der Welle 28 wird der Schnitt der einzelnen Bleche vereinfacht und kompakter. Somit sind die Fertigung, der Transport und das Handling vereinfacht. So ist es vergleichsweise einfach möglich, eine elektrische Maschine 6 mit vergleichsweise großen Abmessungen zu fertigen. Ferner ist eine Verbindung des Halteelements 58 an der Welle 28 variabel und kann in unterschiedlicher Weise erfolgen. So ist insbesondere ein Pressegesetz ermöglicht. Infolgedessen ist ein Einsatz der elektrischen Maschine 6 bei dynamischen Anwendungen, also insbesondere bei vergleichsweise schnellen Änderungen der Drehrichtung sowie bei hohen Winkelbeschleunigungen, vorteilhafter als beispielsweise bei einer Passfederverbindung.

Die elektrische Maschine ist beispielsweise ein Permanentmagnet-Synchronmotor mit vergrabenen V-förmig angeordneten Permanentmagneten 48, 50, wie in den Figuren 2-7 gezeigt. Alternativ sind die Permanentmagneten 48 speichenförmig angeordnet, sodass die elektrische Maschine 6 eine sogenannte SPM-Konfiguration (Spoke-PM) aufweist, wie in den Figuren 12-16 gezeigt. Alternativ weist die elektrische Maschine 6 eine U-förmige Anordnung der Permanentmagneten 48, 50, 60 auf, wie in den Figuren 8 und 9 gezeigt. Alternativ hierzu ist die elektrische Maschine 6 insbesondere ein Synchron-Reluktanzmotor, wie in den Figuren 10 und 11 dargestellt. Aufgrund der Verbindungsstege 78 ist eine Stabilität erhöht. Beispielsweise ist bei jedem der Beispiele zusätzlich ein Verguss vorhanden, was eine Stabilität weiter erhöht.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Fahrzeug
- 4: Antriebsrad
- 6: elektrische Maschine
- 8: Batterie
- 10: Steuergerät
- 12: Gehäuse
- 14: Elektronikfach
- 16: Maschinenfach
- 18: B-seitiges Lagerschild
- 20: erstes Lager
- 22: Umrichter
- 24: Stator
- 26: Rotor
- 28: Welle
- 30: Blechpaket
- 32: Luftspalt
- 34: zweites Lager
- 36: A-seitiges Lagerschild
- 38: Rotationsachse
- 40: axiale Richtung
- 42: zweiter Blechpaketabschnitt
- 44: erster Blechpaketabschnitt
- 46: Spalt
- 48: Permanentmagnet
- 50: zweiter Permanentmagnet
- 52: Befestigungselement
- 54: Aussparung
- 56: Verbindung
- 58: Halteelement
- 60: dritter Permanentmagnet
- 62: drittes Befestigungselement
- 64: zweites Befestigungselement
- 66: viertes Befestigungselement
- 68: dritter Blechpaketabschnitt
- 70: zweiter Spalt
- 72: vierter Permanentmagnet
- 74: fünfter Permanentmagnet
- 76: sechster Permanentmagnet
- 78: Verbindungssteg
- 80: Verfahren
- 82: erster Arbeitsschritt
- 84: zweiter Arbeitsschritt
- 86: dritter Arbeitsschritt
- 88: vierter Arbeitsschritt

## Patentansprüche

1. Rotor (26) einer elektrischen Maschine (6), insbesondere Elektromotor, mit einem eine Welle (28) umgebenden Blechpaket (30), das einen sich in einer axialen Richtung (40) erstreckenden ersten Blechpaketabschnitt (44) und einen sich in der axialen Richtung (40) erstreckenden zweiten Blechpaketabschnitt (42) aufweist, die aneinander mittels eines Befestigungselements (52) angebunden sind, das aus einem dia- oder paramagnetischen Material erstellt ist.

2. Rotor (26) nach Anspruch 1,
**dadurch gekennzeichnet,**
**dass** der erste Blechpaketabschnitt (44) unter Ausbildung eines Spalts (46) von dem zweiten Blechpaketabschnitt (42) beabstandet ist, und dass der erste Blechpaketabschnitt (44) lediglich mittels des Befestigungselements (52) in mechanischem Kontakt mit dem zweiten Blechpaketabschnitt (42) ist.

3. Rotor (26) nach Anspruch 1,
**dadurch gekennzeichnet,**
**dass** der erste Blechpaketabschnitt (44) unter Ausbildung eines Spalts (46) von dem zweiten Blechpaketabschnitt (42) beabstandet ist, in dem ein Permanentmagnet (48) angeordnet ist, wobei der erste Blechpaketabschnitt (44) mittels des Befestigungselements (52) und mittels des Permanentmagneten (48) in mechanischem Kontakt mit dem zweiten Blechpaketabschnitt (42) ist.

4. Rotor (26) nach Anspruch 3,
**dadurch gekennzeichnet,**
**dass** der Spalt (46) senkrecht zu der axialen Richtung (40) einen V- oder U-förmigen Querschnitt aufweist, und dass in dem Spalt (46) ein zweiter Permanentmagnet (50), und insbesondere ein dritter Permanentmagnet (60), angeordnet ist, wobei zu dem ersten Blechpaketabschnitt (44) die gleichen magnetischen Pole weisen.

5. Rotor (26) nach Anspruch 3 oder 4,
**gekennzeichnet durch**
einen dritten Blechpaketabschnitt (68), der unter Ausbildung eines zweiten Spalts (70) von dem ersten Blechpaketabschnitt (44) beabstandet ist, wobei der erste Blechpaketabschnitt (44) mittels eines zweiten Befestigungselements (64) und mittels eines vierten Permanentmagneten (72) in mechanischem Kontakt mit dem dritten Blechpaketabschnitt (68) ist, und wobei der erste Blechpaketabschnitt (44) zwischen dem dritten Blechpaketabschnitt (68) und dem zweiten Blechpaketabschnitt (42) angeordnet ist.

6. Rotor (26) nach Anspruch 3,
**dadurch gekennzeichnet,**
**dass** senkrecht zu der axialen Richtung (40) der Spalt (46) sowie der erste Blechpaketabschnitt (44) als auch der zweite Blechpaketabschnitt (42) einen trapezförmigen Querschnitt aufweisen.

7. Rotor (26) nach einem der Ansprüche 1 bis 6,
**gekennzeichnet durch**
eine Anzahl derartiger erster Blechpaketabschnitte (44), die jeweils mittels eines zugeordneten Befestigungselements (52) an dem zweiten Blechpaketabschnitt (42) angebunden sind, wobei der zweite Blechpaketabschnitt (42) insbesondere an der Welle (28) anliegt.

8. Rotor (26) nach einem der Ansprüche 1 bis 6,
**gekennzeichnet durch**
eine Anzahl derartiger erster Blechpaketabschnitte (44), und eine Anzahl derartiger zweiter Blechpaketabschnitte (42), die jeweils mittels des Befestigungselements (52) aneinander angebunden sind, wobei das Befestigungselement (52) insbesondere an der Welle (28) anliegt.

9. Rotor (26) nach einem der Ansprüche 1 bis 6,
**gekennzeichnet durch**
eine Anzahl derartiger erster Blechpaketabschnitte (44), und eine Anzahl derartiger zweiter Blechpaketabschnitte (42), die jeweils mittels eines zugeordneten Befestigungselements (52) an einem Halteelement (58) angebunden sind, wobei das Halteelement (58) insbesondere unter Ausbildung eines Presssitzes an der Welle (28) anliegt.

10. Rotor (26) nach einem der Ansprüche 7 bis 9,
**dadurch gekennzeichnet,**
**dass** jeweils zwei der Befestigungselemente (52, 62) mittels eines Verbindungsstegs (78) aus einem dia- oder paramagnetischen Material verbunden sind, das insbesondere an den beiden Befestigungselementen (52, 62) angeformt ist.

11. Rotor (26) nach einem der Ansprüche 1 bis 10,
**dadurch gekennzeichnet,**
**dass** das Befestigungselement (52) endseitig form- und/oder kraftschlüssig in einer Aussparung (54) des ersten Blechpaketabschnitts (44) einliegt, wobei das Ende des Befestigungselements (52) senkrecht zu der axialen Richtung (40) insbesondere einen runden oder rechteckförmigen oder dreiecksförmigen Querschnitt aufweist.

12. Elektrische Maschine (6), insbesondere Hauptantrieb eines Fahrzeugs (2), mit einem Stator (24), der einen Rotor (26) nach einem der Ansprüche 1 bis 11 umfangsseitig umgibt.
